# EUROPEAN PATENT APPLICATION

(11) **EP 4 835 673 A1**
(43) Date of publication of application: **04.11.2026**
(21) Application number: 25305621.2
(22) Date of filing: 30.04.2025
(51) Int. Cl.: G06F 11/07, G06F 11/30, G06F 11/362

(54) **MEMORY LEAK DETECTION METHODS, SOFTWARE AND APPARATUSES FOR IMPLEMENTING THE SAME**

(71) Applicant: SCHNEIDER ELECTRIC INDUSTRIES SAS, 92500 Rueil-Malmaison (FR)
(72) Inventor: HENRIC, Matthieu, 06510 Carros (FR); VIDRIL, Marc, 06530 Saint Cezaire-sur-Siagne (FR)
(74) Representative: Plasseraud IP

(57) **Abstract**

A method for memory leak detection is provided, which comprises: Upon detecting a memory allocation operation performed for allocating a memory space in a runtime memory during execution of a computer program on a processor coupled with the runtime memory, storing, in a storage memory, memory allocation data for the memory space allocation, wherein the memory allocation data comprises identification data of the memory allocation, and timestamp data representing a time associated with the allocation of the memory space, determining a time duration for the memory space allocation based on the memory allocation data, and determining whether there is an occurrence of a memory leak during the execution of the computer program on the processor based on the time duration for the memory space allocation.

## Description

The present disclosure relates to the detection of memory leaks during execution of a computer program by a processor, in particular in the context of embedded systems.

In the field of computer science, the terms "memory leak" refer to an error occurring in the management of a memory allocation during execution of a computer program by a processor, because the allocated memory is not available or is not later freed up by the computer program being executed.

Memory leaks are an important issue because each occurrence of a memory leak results in a decrease of the amount of memory space available to execute the program, which may lead in resource constrained systems to a system crash further to free memory space being no longer available.

For embedded systems this issue is even more problematic because embedded systems are typically constrained with respect to available memory while they also typically must run without interruption. Memory leaks in computer programs executed in embedded systems will therefore almost unavoidably lead to a system crash when there is no more free memory space available for executing the program.

In addition, embedded systems are generally real time systems or near-real time systems, and conventional memory leak tracker tools are typically too intrusive to be compatible with software execution in real-time or even near real-time and have a significant impact on system performance when used on embedded systems which may lead to a system crash.

There is therefore a need to provide improved schemes for detecting memory leaks, software and apparatuses implementing the same that address at least some of the above-described drawbacks and shortcomings of the conventional technology in the art.

It is an object of the present subject disclosure to provide improved schemes for detecting memory leaks, software and apparatuses implementing the same.

Another object of the present subject disclosure is to provide improved schemes for detecting memory leaks, software and apparatuses implementing the same for alleviating the above-described drawbacks and shortcomings of conventional schemes, in particular in that the proposed scheme for memory leak detection may be used in computer programs being executed in real-time or near real-time.

Yet another object of the present subject disclosure is to provide improved schemes for detecting memory leaks, software and apparatuses implementing the same for alleviating the above-described drawbacks and shortcomings of conventional schemes, in particular in that the proposed scheme for memory leak detection may be used in memory-constrained computer systems, such as for example embedded systems.

To achieve these objects and other advantages and in accordance with the purpose of the present subject disclosure, as embodied and broadly described herein, in one aspect of the present subject disclosure, a memory leak detection method is proposed, which may comprise one or more of the following: Upon detecting a memory allocation operation performed for allocating a memory space in a runtime memory during execution of a computer program on a processor coupled with the runtime memory, storing, in a (e.g. pre-allocated) storage memory, memory allocation data for the memory space allocation, the memory allocation data comprising identification data of the memory allocation and timestamp data representing a time associated with the allocation of the memory space, determining a time duration for the memory space allocation based on the memory allocation data; and determining whether there is an occurrence of a memory leak during the execution of the computer program on the processor based on the time duration for the memory space allocation.

The proposed scheme advantageously allows detecting the occurrence of a memory leak during execution of a computer program on a processor which can be used in embedded systems for execution of computer programs, including in real time or near-real time. In particular, the proposed scheme for memory leak detection can be implemented so that its use has limited performance impact on the system on which it is used.

In one or more embodiments, the identification data may comprise an address returned by execution of the memory allocation operation. In some embodiments, the execution of the memory allocation operation may lead to generate an address (e.g. a memory address) pointing in memory to the memory space that was allocated. Such address may therefore advantageously be used in some embodiments to identify the memory allocation operation.

In one or more embodiments, the proposed method may further comprise: Upon detecting a memory free operation performed for freeing the memory space allocated during the execution of the computer program on the processor, removing from the storage memory the memory allocation data. Advantageously, memory allocation operation that are followed by a corresponding memory free operation are not monitored through stored memory allocation data. **In** addition, the storage memory may be constrained in memory space, so removing therefrom memory allocation data stored therein that corresponds to a subsequently detected memory free operation advantageously allows preserving the space in the storage memory and not storing in the storage memory data related to a memory allocation for which there is no memory leak.

**In** one or mor embodiments, the memory allocation data may further comprise call stack data for (e.g. leading to) the memory allocation operation. Storing in the storage memory call stack data related to the memory allocation operation may advantageously allow a faster memory leak fault debugging in the source code through retrieving in the source code the function call corresponding to the memory allocation operation for which a memory leak issue was detected using a scheme according to an embodiment of the present subject disclosure.

In one or more embodiments, the proposed method may further comprise: further to determining the occurrence of the memory leak, retrieving from the storage memory the call stack data for (e.g. leading to) the memory allocation operation.

In one or more embodiments, the occurrence of the memory leak is determined based on comparing the time duration for the memory space allocation with a predefined threshold. In some embodiments, the time duration for the memory space allocation may correspond to the time elapsed since the memory allocation data was stored in the storage memory, which corresponds to the time duration of storage of the memory allocation data in the storage memory. Advantageously, such time duration may be used to detect a suspected memory leak through comparing the time duration with a predefined time duration threshold, which can advantageously be set up by a user of a memory leak detection tool according to embodiments of the present subject disclosure. Using a comparison of the time duration with a predefined time duration threshold also advantageously allows performing a dichotomic detection of potential memory leak issues, by performing subsequent iterations of the proposed scheme with decreasing time duration thresholds.

In one or more embodiments, the proposed method may further comprise further to determining the occurrence of the memory leak, generating a log file comprising data identifying the memory allocation operation.

In one or more embodiments, the storing in the storage memory of the memory allocation data for the memory space allocation may be performed based on determining that the allocated memory space is greater than a predefined memory space allocation threshold. This allows limiting the detection of potential memory leaks to memory allocations for a minimum memory space, which may be advantageous in particular in cases where the storage memory is severely constrained, as it avoids storing in the storage memory a large number of memory allocation data for memory allocation operations, potentially leading to using the entire memory space in the storage memory thereby rendering impossible the storage in the storage memory of memory allocation data related to allocation in the memory of a large memory space that could correspond to a significant memory leak issue.

In one or more embodiments, the storing in the storage memory the memory allocation data for the memory space allocation is performed based on comparing a number of storing in the memory of respective memory allocation data for previously performed memory space allocations with a predefined maximum number threshold.

In one or more embodiments, one or more of a memory allocation operation in a computer program code and a memory free operation in the computer program code may be detected during execution of the computer program through a wrapper program configured in the computer program. Advantageously, a wrapper program may be used to insert in the computer program, in some embodiments without modifying the source code of the computer program, additional computer program instructions for detecting one or more of memory allocation operations and memory free operations set forth in the source code of the computer program.

In one or more embodiments, the memory allocation operation may be detected during execution of a predefined portion of the computer program. Advantageously, the detection of potential memory leaks may be limited to e.g. certain portion of the source code of the computer program or specific processors (e.g. specific cores) that execute part of the computer program through limiting the detection of memory allocation operations to only a predefined portion of the computer program.

In one or more embodiments, the memory allocation data may be stored in a data structure (e.g. a list, a chart) in the storage memory further to determining that there is memory space available for storing the memory allocation data in the data structure.

In another aspect of the present subject disclosure, an apparatus is proposed, which comprises a processor and a memory operatively coupled to the processor, wherein the apparatus is configured to perform a method as proposed in the present subject disclosure.

In yet another aspect of the present subject disclosure, a (in some embodiments non-transitory) computer-readable medium encoded with executable instructions which, when executed, causes an apparatus comprising a processor operatively coupled with a memory, to perform a method as proposed in the present subject disclosure, is proposed.

In yet another aspect of the present subject disclosure, a computer program product comprising computer program code (in some embodiments tangibly) embodied in a computer readable medium, said computer program code comprising instructions to, when provided to a computer system and executed, cause said computer to perform a method as proposed in the present subject disclosure, is proposed. In another aspect of the present subject disclosure, a data set representing, for example through compression or encoding, a computer program as proposed herein, is proposed.

It should be appreciated that the present subject disclosure can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 shows an exemplary edge computing environment to which the proposed methods may be applied according to one or more embodiments of the present subject disclosure;
Figure 2 is a diagram that illustrates an exemplary scheme for detecting a memory leak fault during execution of a computer program on a computer apparatus according to one or more embodiments of the present subject disclosure;
Figure 3 illustrates an exemplary log file according to one or more embodiments of the present subject disclosure; and
Figure 4 is a diagram that illustrates an exemplary state machine of a memory leak tracking unit according to one or more embodiments of the present subject disclosure.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, units, tools, block diagrams and flowchart illustrations of the methods, systems, and computer program according to one or more exemplary embodiments. Each described function, engine, unit, tool, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive, SSD drives), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

As used herein, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the present subject disclosure, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the present subject disclosure, the terms "wrapping" and "wrapper", along with their derivatives, may be used to indicate a computer program or a software code written in a first computer programming language that wraps around, or integrate function calls or software objects written in a second computer programming language different from the first computer programming language. A wrapper as used in some embodiments of the present subject disclosure may refer to a second computer programming function that will be called instead of a first computer programming function designed to perform a desired operation. This allows adding additional features by making it possible to add code before and after the first function designed to perform the desired operation.

For example, the source code (in the C programming language) of a wrapper on the memory allocation "malloc" function, which is designed to write an error message whenever an allocation fails may include the following:

```
       void * _wrappper_malloc (int size)
       {
       void * addrAllocated = malloc(size);
  
       if( NULL == addrAllocated )
       printf("Allocation failed\n");
  
       return addrAllocated;
       }
```

For purposes of the present subject disclosure, the terms "application," "program," or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the apparatus on which the application program is implemented. For example, a graphical user interface (or GUI) may be generated and displayed on a screen of the apparatus.

For purposes of the present disclosure, the terms "computational resources" or "CPU resources" are used interchangeably in the present description to denote any computing or Central Processing Unit (CPU) resource usable on a computing platform for processing (e.g. encoding or transcoding) multimedia content, including without limitation one or more resources corresponding to one or more of the following types of processing resources and processing resource parameters: number of CPU cores, number of GPU cores, type of CPU architecture (e.g. RISC vs. CISC), type of processing unit (CPU, GPU, FPGA), CPU core speed, RAM resources (including one or more of the following: RAM size, RAM speed, etc.) associated with computational resources, storage type resources (hot vs. cold, etc.). In one or more embodiments, the computational resources may be allocated in CPU core units.

For purposes of the present subject disclosure, the term "operation" may refer to any data processing, for example carried out as part of executing a function call (e.g. a memory allocation or a memory free function) in a source code corresponding to an executable computer program during execution of the computer program on a computer system comprising a processor. For example, a memory allocation operation may in some embodiments refer to an operation performed to allocate memory space in a memory during execution of a computer program on a computer system that corresponds to executing a memory allocation function call in a corresponding source code.

For purposes of the present disclosure, the terms "real-time" and "near-real time" as used herein refer to a computer system designed to process one or more of data and events with predefined, usually strict time constraints. Real-time or near-real time systems are typically used in applications where response time is critical, such as industrial control systems, in-vehicle embedded systems, financial trading systems, and medical devices.

Some characteristic features of real-time (or near-real time) systems may include one or more of the following:
Time constraints: Real-time systems are designed to respond to events within a specific time frame. Meeting these deadlines is often more important than value for money.
Determinism: Real-time systems are designed to be predictable. The response time to an event must be constant or, at least, limited by a known maximum response time.
Reliability: Real-time systems are designed to be extremely reliable, as failure can have serious or even catastrophic consequences.
Responsiveness: Real-time systems are designed to be able to react quickly to changes in their environment.
Priority management: Tasks in a real-time system are often prioritized to ensure that the most critical tasks are executed first.

Two main types of real-time systems may sometimes be distinguished, as follows:
Hard real-time: In these systems, time constraints are absolutely crucial, as for example a timeout may cause the system to fail.
Soft real-time: In these systems, compliance with time constraints is important, but occasional overruns are tolerated. The focus is on average performance rather than strict adherence to deadlines.
Real-time (or near-real time) systems are often used in fields where safety and reliability are paramount, such as aerospace, automotive, and critical infrastructure.

For purposes of the present subject disclosure, a "call stack" (or "callstack") should be understood to refer to a data structure (which may be stored in memory) used by computer programs to track active function calls at a given time. A call stack is typically managed according to a "last in, first out" (LIFO) principle, which means that the last function called is the first to be removed from the stack when it finishes its execution. Call stack recovery, that is, the operations to be performed to recover data representing a call stack typically depends on the programming language used and the program execution environment. For example, in Python, the "traceback" module can be used to retrieve and display the call stack. In the C programming language, retrieving a call stack can be more difficult, as the C programming language doesn't provide a function specifically designed for retrieving a call stack, so that one may for example have to access the registers of the task for which a corresponding call stack is desired, and rebuild the call stack.

For purposes of the present disclosure, a "computer network" should be understood to refer to a network that may couple devices (also referred to herein as "nodes") so that data communications may occur between devices, including between wireless devices operatively connected via a wireless network, for example. A network may also include mass storage, such as network attached storage (NAS), a storage area network (SAN), or other forms of computer or machine readable media, for example, and may include or be operatively connected to a server. A network may include the Internet, one or more local area networks (LANs), one or more wide area networks (WANs), wire-line type connections, wireless type connections, cellular, such as carrier telephone lines, optical fibers, synchronous optical networks, synchronous digital hierarchy links, powerline communication links, or any combination thereof.

It should be understood that embodiments of the present subject disclosure may be used for detecting a memory leak fault occurring during execution (in some embodiments in real time or near-real time) of a computer program on any suitable computer apparatus comprising a processor (such as for example any general-purpose computer), in particular, although not limited to, detecting a memory leak fault occurring during execution (in some embodiments in real time or near-real time) of a computer program on a computer apparatus of an embedded system comprising a processor.

In one or more embodiments, aspects (features) of the methods provided in the present subject disclosure may be implemented in a memory leak tracking tool (which may be sometimes called in the present subject disclosure a "memory leak tracking unit") configured to detect memory leak issues in a computer program (which may sometimes be referred herein as a "target computer program") during execution thereof on a processor coupled with a runtime memory in a computer (e.g. a general-purpose computer). Depending on the embodiment, the memory leak tracking tool may be implemented in software, in hardware, or in a combination thereof.

In embodiments in which the memory leak tracking tool is implemented in software, the memory leak tracking tool may be configured to be wrapped around the target computer program. For example, in embodiments in which the target computer program source code uses a compiled programming language, such as, without limitation, C, C++, Crystal, Curl, Red and Rust, source code files of the memory leak tracking tool may be compiled with files of the target computer program, and the memory leak tracking tool may be wrapped around the target programming language to generate a computer program executable on the processor through linking commands during linking to produce an executable computer program.

Using a memory leak tracking tool configured to be wrapped around the target computer program advantageously avoids modifying the target computer program for purposes of executing the memory leak tracking tool thereon.

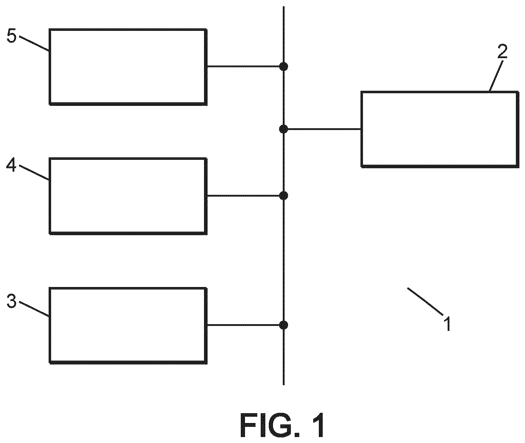

Figure 1 shows an apparatus (1) configured to use features in accordance with embodiments of the present subject disclosure.

In one or more embodiments, the apparatus 1 may include a control engine 2, a memory leak tracking engine 3, a user interface engine 4, and a memory 5.

In the architecture illustrated on Fig. 1, all of the memory leak tracking engine 3, user interface engine 4, and memory 5 are operatively coupled with one another through the control engine 2.

In one or more embodiments, the memory leak tracking engine 3 is configured to perform various aspects of embodiments of the proposed methods for memory leak detection and/or tracking as described in the present subject disclosure. For example, in some embodiments, the memory leak tracking engine 3 may be configured for, upon detecting a memory allocation operation performed for allocating a memory space in a runtime memory during execution of a computer program on a processor coupled with the runtime memory, storing, in a (pre-allocated) storage memory, memory allocation data for the memory space allocation, wherein the memory allocation data comprises identification data of the memory allocation, and timestamp data representing a time associated with the allocation of the memory space, determining a time duration for the memory space allocation based on the memory allocation data, and determining whether there is an occurrence of a memory leak during the execution of the computer program on the processor based on the time duration for the memory space allocation.

In one or more embodiments, the user interface engine 4 is configured to perform various aspects of embodiments of the proposed methods for memory leak detection and/or tracking as described in the present subject disclosure. For example, in some embodiments, the user interface engine 4 may be configured for providing an interface to a user of the apparatus 1 so that the user may configure the apparatus 1 for controlling operations of the apparatus 1, for example via one or more user-defined memory tracking parameters as described in the present subject disclosure.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage computer storage medium, capable of storing a data structure representing a computer network to which the apparatus 1 belongs, coupled to the control engine 2 and operable with the memory leak tracking engine 3 and the user interface engine 4 to facilitate management and processing of data stored in association therewith according to embodiments of the present subject disclosure.

In embodiments of the present subject disclosure, the apparatus 1 is configured for performing the methods described herein.

It will be appreciated that the apparatus 1 shown and described with reference to Fig. 1 is provided by way of example only. Numerous other architectures, operating environments, and configurations are possible. Other embodiments of the node may include fewer or greater number of components, and may incorporate some or all of the functionality described with respect to the apparatus 1 components shown in Fig. 1. Accordingly, although the control engine 2, memory leak tracking engine 3, user interface engine 4, and memory 5 are illustrated as part of the apparatus 1, no restrictions are placed on the location and control of components 2 - 5. In particular, in other embodiments, components 2 - 5 may be part of different entities or computing systems.

Depending on the embodiment, the apparatus 1 may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

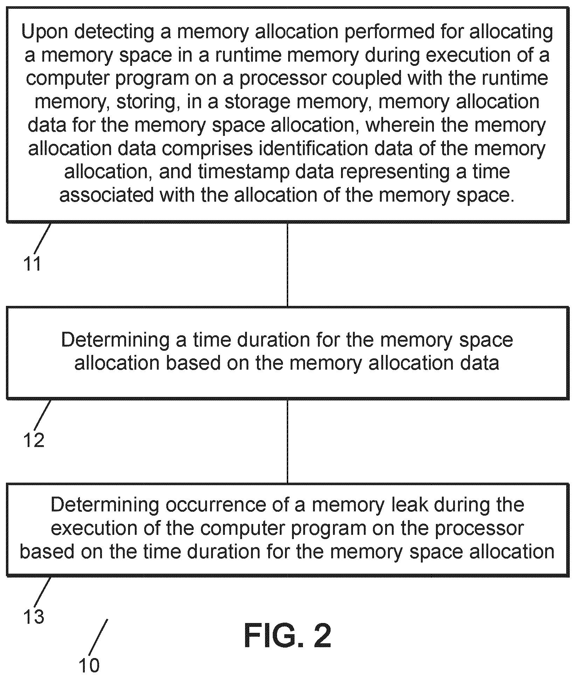

Figure 2 is a diagram that illustrates an exemplary scheme (10) for detecting a memory leak fault during execution of a computer program on a computer apparatus according to one or more embodiments of the present subject disclosure.

One considers a computer apparatus comprising CPU resources (e.g. comprising a processor) coupled with a memory, such as for example the computer apparatus shown on Fig. 1.

In one or more embodiments, a memory allocation (operation) performed for allocating a memory space during execution of a computer program on the processor may be detected.

In some embodiments, the detection of the memory allocation may be performed through detecting that a memory allocation function call written in the source code of the computer program was executed during execution of the computer program on the processor.

In some embodiments, the source code of the computer program may use different types of memory allocation functions, such as for example a "malloc" memory allocation, a "calloc" memory allocation, and a new and "memPartAlloc" functions as available in the C/C++ software programing langage, and depending on the embodiment one or more of these types of memory allocations may be detected during execution of the computer program on the processor.

In one or more embodiments, upon detecting a memory allocation (operation) performed for allocating a memory space during execution of the computer program on the processor, memory allocation data for the memory space allocation may be stored (11) in a memory (in some embodiments in a data structure stored in the memory) of the computer apparatus.

In one or more embodiments, the memory allocation data may comprise identification data of the memory allocation. For example, in some embodiments, the memory allocation data may comprise identification data of the allocated memory space. For example, in embodiments in which the memory allocation corresponds to a memory allocation function call being executed, the identification data may comprise an address (in some embodiments a memory address, e.g. in the memory) returned by the memory allocation function upon being called (executed).

**In** one or more embodiments, the memory allocation data may comprise timestamp data representing a time associated with the allocation of the memory space. Depending on the embodiment, the timestamp data may take any suitable format, such as for example representing a date and time at which the memory allocation was detected. For example, in embodiments in which the memory allocation corresponds to a memory allocation function call being executed, the identification data may comprise an address (in some embodiments a memory address, e.g. in the memory) returned by the memory allocation function upon being called (executed).

In some embodiments, the identification data of the memory allocation may be stored in association with the timestamp data in the memory, possibly along with other data comprised in the memory allocation data.

In one or more embodiments, the memory allocation data may be stored in a data structure configured in the memory for storing a plurality of memory allocation data respectively corresponding to different memory allocations being performed during execution of the computer program. Depending on the embodiment, the data structure may be an array, a chain list or any data structure suitable for storing records containing respective memory allocation data respectively associated with detected memory allocations. In some embodiments, upon detection of a new memory allocation, corresponding memory allocation data may be generated, and the data structure configured in the memory may be searched (in some embodiments parsed) for an available (free) space for storing therein the corresponding memory allocation data. In some embodiments, upon detecting a free space for storing the memory allocation data, the memory allocation data (for example comprising an address in memory of an allocated memory space) may be stored in the data structure.

In one or more embodiments, a time duration for the memory space allocation may be determined (12) based on the memory allocation data stored in the memory.

In some embodiments, current time data may be obtained, and the time duration for the memory space allocation may be determined based on a comparison of the current time data with the timestamp data comprised in the memory allocation data. Depending on the embodiment, the current time data may have any suitable format, and the format of the current time data may be similar (in some embodiments identical) to that of the timestamp data.

**In** some embodiments, the time duration may be determined based on a difference between the current time represented by the current time data and the time of the allocation of the memory space represented by the timestamp data.

Depending on the embodiment, the time duration may follow any suitable format, such as for example a hour(s)-minute(s)-second(s) format.

**In** one or more embodiments, a determination may be made as to whether there is an occurrence of a memory leak during the execution of the computer program on the processor based on the time duration for the memory space allocation.

**In** some embodiments, a determination (13) may be made based on the time duration for the memory space allocation that there is an occurrence of a memory leak during the execution of the computer program on the processor.

In some embodiments, a determination may be made based on the time duration for the memory space allocation that there is no occurrence of a memory leak during the execution of the computer program on the processor.

In one or more embodiments, the identification data comprised in the memory allocation data may comprise an address returned by the execution of the memory allocation, such as for example an address in the runtime memory which is related to the memory space allocated in the runtime memory as a result of the memory allocation.

In one or more embodiments, the identification data comprised in the memory allocation data may comprise a memory allocation identifier generated and allocated to the memory allocation further to the detecting the memory allocation.

In one or more embodiments, the proposed method may further comprise: detecting a memory free operation during execution of the computer program for freeing up the memory space allocated as a result of the memory allocation. **In** some embodiments, upon detecting a memory free operation performed for freeing the memory space allocated during the execution of the computer program on the processor, the memory allocation data may be removed from the storage memory.

Detecting memory free operations that respectively correspond to previously detected memory allocation operations advantageously avoids tracking memory management operations which can be considered as non-erroneous.

In one or more embodiments, the memory allocation data may further comprise call stack data leading to the memory allocation operation.

In some embodiments, the call stack data may represent a stack of one or more function calls performed during execution of the computer program prior to calling the memory management function.

**In** some embodiments, the call stack data may take the form of a list of identifiers of nested function calls executed prior to the memory allocation, the last function call of the nested list being the function call during execution of which the memory allocation function call was made.

Storing call stack information associated with a memory allocation that is later identified as a memory leak can advantageously be used to identify the initial function call that led to the memory leak for software debug purposes.

**In** one or more embodiments in which the memory allocation data comprise call stack data, the call stack data stored in the storage memory may be retrieved from such memory further to determining the occurrence of a memory leak for the memory allocation, for example for analyzing for debug purposes.

**In** one or more embodiments, the occurrence of a memory leak issue related to the memory allocation for which memory allocation data was stored in the storage memory may be determined based on comparing the time duration determined for the memory space allocation with a predefined threshold.

Advantageously, the predefined threshold may be used to set a time duration threshold beyond which a memory allocation may be deemed as a memory leak. For example, in some embodiments, occurrence of a memory leak issue may be determined for a memory allocation for which the timestamp data stored in the storage memory indicates that the corresponding memory allocation was executed for a duration longer than the predefined threshold. In some embodiments, the predefined threshold may be used as a memory leak detection criterion for identifying the memory allocations which are older than the predefined threshold and for which the allocated space has not been freed up during a duration corresponding to the predefined threshold.

Depending on the embodiment, the occurrence of a memory leak issue may be determined in cases where, based on the time duration, the memory allocation is determined as a potential memory leak.

In this regard, advantageously, the predefined threshold may be used with a plurality of memory allocations to perform one or more of selecting (in some embodiments only) those memory allocations for which memory allocation data is stored in the storage memory (thereby indicating in some embodiments that the corresponding allocated memory space has not been freed up) and which are older than the predefined threshold and filtering out other memory allocations (for which memory allocation data is stored in the storage memory) detected during execution of the computer program.

**In** one or more embodiments, further to determining the occurrence of a memory leak for the memory allocation, a log file comprising data identifying the memory allocation operation may be generated, for further analysis, for example for debug purposes. **In** some embodiments, data written in the log file may comprise part or all of the memory allocation data related to the memory allocation.

**In** one or more embodiments, the storing in the storage memory of the memory allocation data for the memory space allocation may be performed based on determining that the allocated memory space is greater than a predefined memory space allocation threshold. For example, in some embodiments, a user may define a minimum allocation space in order to avoid storing in the storage memory memory allocation data for small allocated memory spaces (for memory space smaller than the minimum allocation space), thereby advantageously avoiding the risk of overflowing the available space in the storage memory. This advantageously allows focusing first on potential memory leaks issues in the computer program that are related to large memory spaces allocated in the memory, which may be critical in particular in systems wherein the available memory space is constrained (such as, for example, embedded systems).

Likewise, in one or more embodiments, the storing in the storage memory of the memory allocation data for the memory space allocation may be performed based on determining that the allocated memory space is smaller than a predefined memory space allocation threshold. This advantageously allows, for example once potential memory leaks issues in the computer program that are related to large memory spaces allocated in the memory have been resolved, focusing (for example at a later stage of a memory leak debugging analysis) on potential memory leaks issues in the computer program that are related to smaller memory spaces allocated in the memory, which may still be critical in particular in systems wherein the available memory space is constrained (such as, for example, embedded systems).

**In** some embodiments, memory allocation data may be stored in the storage memory upon detecting a memory allocation operation during execution of the computer program (in embodiments subject to space being available in the storage memory). In some embodiments, the memory allocation data may comprise a timestamp for identifying a time corresponding to the occurrence (in embodiments the execution) of the memory allocation operation, for example a timestamp identifying a time (e.g. and date) at which the memory allocation data was stored in the storage memory. In some embodiments, such timestamp data may advantageously be used to determine based on the timestamp data a time duration elapsed after occurrence of the memory allocation operation, so as to compare such time duration with a (e.g. user defined) predefined threshold for purposes of detecting potential memory leaks. In some embodiments, a log file may be created by writing therein data corresponding to one or more memory allocations (such as the respective memory allocation data), under the condition in some embodiment that the time duration for a memory allocation is greater than a predefined threshold. Advantageously, a user may define a time duration threshold that is used for filtering out of the log file those memory allocations which have not been performed since a time duration exceeding the threshold, so that only the memory allocations that have lasted for a time duration that is greater than the threshold may be logged for further analysis as potential memory leaks.

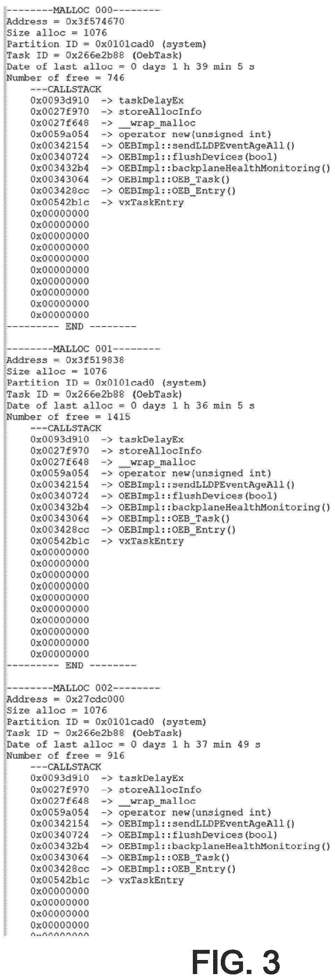

Figure 3 shows an exemplary log file created by a memory leak tracking unit according to one or more embodiments.

Referring to Fig. 3, an exemplary call stack may comprise the following sequence of function calls, from the first function call to the last function call being the memory allocation function call:
Exemplary nested list of function calls (or tasks): vxTaskEntry, which calls "OEBImpl::OEB_Entry()", which calls "OEBImpl::OEB_Task()", which calls "OEBImpl::backplaneHealthMonitoring()", which calls "OEBImpl::flushDevices(bool)", which calls "OEBImpl::sendLLDPEventAgeAll()", which calls the memory allocation "__wrap_malloc" function (memory allocation detected according to embodiments of the present subject disclosure).

The exemplary log file shown on Fig. 3 illustrates an exemplary situation in which 3 memory allocation operations have been performed while executing the computer program for a duration that exceeds a predefined time duration of one hour and 30 minutes, with no corresponding memory free operation (e.g. a memory free operation releasing part or all of the memory space allocated by the memory allocation operation) being performed during this time duration. In embodiments where this predefined time duration is used as a time duration threshold for determining memory allocations that are deemed memory leaks, the three memory allocations shown on Fig. 3 may be considered suspect, that is, as potentially responsible for memory leaks. As shown on Fig. 3, these three memory allocations share a common call stack, which may be considered as an additional hint that there may be a memory leak issue in this call stack.

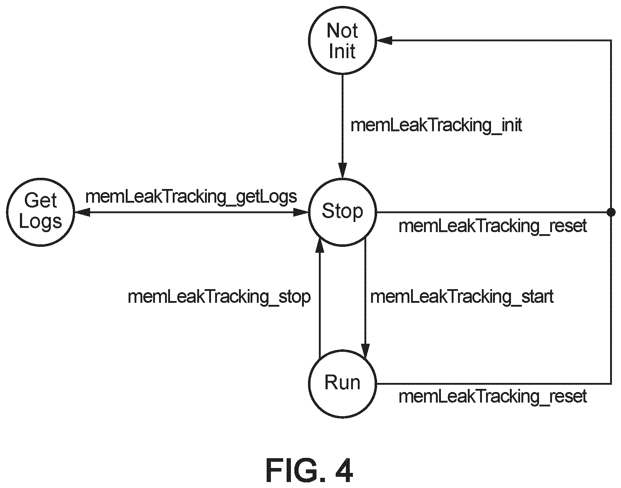

Using call stack information stored in the log file may advantageously be used to quickly locate a memory leak issue in the source code of the target computer program. For example, referring to Fig. 4, a memory leak may be identified in the following line in the source code: "LLDP_REM_TBL_OEB * pData=new LLDP_REM_TBL_OEB;"

Which includes a "new" memory allocation for allocating space in memory which is however not freed up before the predefined time duration threshold of 1h30, thereby creating the deemed memory leak. The call stack data included in the log file may advantageously be used to locate the portion of source code with the detected memory leak issue, and as the case may be to modify the source code to fix the memory leak issue.

In one or more embodiments, the storing in the storage memory of the memory allocation data for the memory space allocation may be performed based on comparing a number of storing in the memory of respective memory allocation data for previously performed memory space allocations with a predefined maximum number threshold. Advantageously, the proposed method may provide the flexibility to ignore new memory allocations beyond a predefined number of previous memory allocations for which respective memory allocation data has been stored in the storage memory.

In one or more embodiments, the memory allocation operation may be detected during execution of a predefined portion of the computer program. The proposed method may therefore provide additional flexibility for selecting portions of the computer program to be monitored for potential memory leaks.

For example, in some embodiments, one or more predetermined tasks of the computer program may be monitored for potential memory leaks, through storing, in the storage memory, memory allocation data only for memory allocations that correspond to a task of the one or more predetermined tasks.

As another example, in some embodiments in which the processor comprises a multi-core processing unit, tasks of the computer program executed on one or more predetermined cores of the processor may be monitored for potential memory leaks, through storing, in the storage memory, memory allocation data only for memory allocations that correspond to a task of the computer program executed on one or more predetermined cores of the processor.

As yet another example, in some embodiments, monitoring for potential memory leaks may be performed upon activation of a monitoring flag, and stopped upon deactivation of the monitoring flag, so that only the tasks executed during the time period the monitoring flag was activated may be monitored for potential memory leaks.

In one or more embodiments, the computer program may be configured to redirect one or more of a memory allocation in a computer program code and a memory free operation in the computer program code to a wrapper program, so that a processing according to embodiments of the present subject disclosure may be performed for one or more of one or more memory allocation operation (e.g. function call) configured in the computer program code and one or more memory free operation (e.g. function call) configured in the computer program code.

Advantageously, a wrapper program may be used to detect the memory allocation operation performed for allocating the memory space in the runtime memory during the execution of the computer program, as the wrapper program may be configured to wrap around a computer program code that includes a memory allocation function call corresponding to the memory allocation operation. Advantageously, the wrapper program may be configured to be wrapped around the computer program code during linking of the computer program code once compiled. Using a wrapper program configured during linking of the target computer program code advantageously allows using the proposed scheme for memory leak detection in the target computer program code with no impact to the target computer program code.

The proposed scheme can therefore be implemented in some embodiments by a memory leak detection unit that can be used with any target computer program and configured to wrap around the computer program through a memory leak detection computer program that is linked together with the target computer program during a linking of the target computer program to produce an executable computer program.

In some embodiments, one or more of a memory allocation operation in a computer program code and a memory free operation in the computer program code are detected during execution of the computer program through a wrapper program configured in the computer program.

For example, a memory leak tracking scheme according to embodiments of the present subject disclosure may be implemented as a software memory leak tracking unit (that may also be referred to as a memory leak tracking "tool") comprising a "klcMemLeakTracking.c" source code file and a "klcMemLeakTracking.h" source code header file. In some embodiments, these files may These files contain the algorithm of the memory leak tracker unit, and in some embodiments one or more interfaces to control execution of the algorithm of the memory leak tracker unit. In order to include the memory leak tracker unit into the target computer program, so as to generate a computer program and detect potential memory leaks in the target computer program during execution of the computer program on a processor coupled with a memory, the source code files klcMemLeakTracking.c and klcMemLeakTracking.h may be included for compilation in a set of source code files together with files of the target computer program to be compiled. In some embodiments, once compilation is completed, linking may be performed with additional linking options such as one or more of, "wrap malloc", "wrap calloc", "wrap free," "wrap memPartAlloc", and "wrap memPartFree" (the function "memPartFree" is an example of a function which operates to deallocate memory space previously allocated using the corresponding function "memPartAlloc", which is an example of a function which operates to allocate memory space). The skilled person will understand that, depending on the computer programming language used for developing the code of the target computer program, any other functions that may be used in the target computer program for memory allocation and memory free may be wrapped, for example through a suitable corresponding linking option. For example, in the example described above, the content of the source code file "klcMemLeakTracking.c" may be adapted so as to define these wrapped functions and to perform the storing of memory allocation data further to detecting a memory allocation and the release of the corresponding stored memory allocation data further to detecting a corresponding memory free.

In one or more embodiments, the memory allocation data may be stored in a data structure (for example a chart or a table), which may be pre-allocated in the storage memory, further to determining that there is memory space available for storing the memory allocation data in the data structure. In such embodiments, the data structure may be pre-allocated in the storage memory, and managed to perform one or more of storing therein memory allocation data associated with a memory allocation operation for allocating a memory space detected during execution of the computer program, and deleting therefrom memory allocation data associated with a memory allocation operation detected during execution of the computer program stored therein upon detecting, during the execution of the computer program, a memory free operation for freeing up the memory space allocated by the memory allocation operation.

Figure 4 is a diagram that illustrates an exemplary state machine of a memory leak tracking unit according to one or more embodiments.

One considers a memory leak tracking unit configured to implement a method according to one or more embodiments of the present subject disclosure.

Depending on the embodiment, the memory leak tracking unit may be implemented in hardware, software, firmware, middleware, microcode, or any suitable combination thereof. If implemented in software, the memory leak tracking unit may in some embodiments be implemented by computer program instructions or software code in a wrapper program configured to wrap a target computer program code (e.g. via linking with the target computer program source code once compiled), which may be stored or transmitted over a (transitory or non-transitory) computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

In one or more embodiments, the memory leak tracking unit may operate according to the exemplary state machine illustrated by Fig. 4.

Even though the following focuses on a non-limiting example based on the exemplary state machine illustrated by Fig. 4, a person of ordinary skill in the art would understand that the proposed processes, apparatuses and computer programs of the present subject disclosure may be implemented based on any suitable state machine (including states and transitions in-between states), and that such proposed processes, apparatuses and computer programs of the present subject disclosure are not limited to the use of any specific state machine, and in particular to the state machine of Fig. 4, which is provided as an example only.

As shown in Fig. 4, in some embodiments, the memory leak tracker unit may be configured to operate according to a state machine with the following four main states:
**NOT INIT:** In some embodiments, in this state, the memory leak tracker may be disabled, and no resource may be allocated for the memory leak tracker.
**STOP:** In some embodiments, in this state, the memory leak tracking unit may not store any memory allocation data upon detection of a memory allocation during execution of a target computer program. In some embodiments, the memory leak tracking unit may keep in a storage memory the data previously stored during operation in the RUN state.
**RUN:** In some embodiments, in this state, for one or more (each) types of memory allocation operation (e.g. through a function call) (e.g. malloc, calloc, new and memPartAlloc), the memory leak tracking unit may search for an available space in the storage memory to store (newly generated) memory allocation data into a data structure (e.g. an array or any suitable data structure to store the memory allocation data) which may be pre-allocated in memory. In some embodiments, an address (in memory) returned by the detected allocation function call may be used as a unique identifier of this memory allocation.

In some embodiments, in this state, for one or more (each) types of memory free operation (e.g. through a function call) (e.g. free, delete, memPartFree), the memory leak tracking unit may use the address (in memory) released through the memory free operation as a unique identifier, and may search for this unique identifier in the memory allocation data stored in the storage memory. Upon detecting memory allocation data in the storage memory that corresponds to (e.g. through including) this unique identifier, the memory leak tracking unit may release in the storage memory the corresponding memory allocation data, and the corresponding space in the storage memory may become free for storing another record of memory allocation data.

**GET LOGS:** In some embodiments, this state may be used to allow retrieving (selecting) from the storage memory part or all of the memory allocation data records stored for more than a predefined time duration threshold. In some embodiments, the retrieved memory allocation data records may be recorded in a (log) file (that may in some embodiments have been preconfigured by a user).

In one or more embodiments, the memory leak tracker unit may be configured to retrieve, from the storage memory, timestamp data that was stored in the storage memory upon detecting a memory allocation operation, the timestamp data representing a time of storing, in the storage memory, memory allocation data corresponding to the detected memory allocation operation, and to obtain current timestamp data representing a time of retrieving the timestamp data from the storage memory. In one or more embodiments, upon determining that a difference between a time represented by the timestamp data and a time represented by the current timestamp data (the difference corresponding to a time duration for the memory space allocation) is higher than a predetermined time duration threshold (e.g. user defined), data describing this memory allocation (e.g. including the corresponding memory allocation data) may be recorded in the file.

In some embodiments, it may be required that the memory leak tracker unit be first in the STOP state before transitioning to the GET LOGS state. In other embodiments, the memory leak tracker unit may be configured to perform one or more of creating, editing, modifying, and deleting the (log) file while running, that is, while being in the RUN state. The ability to create or modify the (log) file while running can advantageously be used for the occurrence of specific cases, such as for example a crash of the system.

As shown in Fig. 4, in some embodiments, the memory leak tracker unit may be configured to operate according to a state machine with the following in-between states transitions, in connection with the four exemplary states shown on Fig. 4:
In some embodiments, the memory leak tracker unit may be configured to perform (in some embodiments condition) a state switch upon the calling of one of the following functions:
**memLeakTracking_init:** In some embodiments, this function may be configured to operate a switch from the NOT INIT state to the STOP state. In some embodiments, it may be configured with a structure of several parameters configured for tuning the memory leak tracker unit. In some embodiments, it may be configured to allocate resources for the memory leak tracker unit.
**memLeakTracking_start:** In some embodiments, this function may be configured to operate a switch from the STOP state to the RUN state.
**memLeakTracking_stop:** In some embodiments, this function may be configured to operate a switch from the RUN state to the STOP state.
**memLeakTracking_getLogs:** In some embodiments, this function may be configured to operate a switch from the STOP state to the GET LOGS state. In some embodiments, once logs are retrieved, the memory leak tracker unit may return automatically to the STOP state.

In some embodiments, if a predefined value (e.g. equal to 1) is given as parameter to this function, the function may be executed even if the memory leak tracker unit is running, which can advantageously serve in case of crash to retrieve relevant information for debug.

**memLeakTracking_reset:** In some embodiments, this function may be configured to operate a switch from the RUN state or the STOP state to the NOT INIT state. In some embodiments, it may be configured to destroy (e.g. all) resources allocated for the memory leak tracker unit, including in some embodiments delete memory allocation data stored in a storage memory.

In one or more embodiments, the memory leak tracker unit may be configured to operate using one or more memory tracking parameters corresponding to features provided by the memory leak tracker unit. In some embodiments, one or more of the memory tracking parameters may be user defined, for example through a user interface configured for allowing a user of the memory leak tracker unit to control corresponding features during use of the memory leak tracker unit through the setting of predefined values of the corresponding parameters. For example, in some embodiments, one or more of these memory tracking parameters may be defined in a data structure configured to be entered as a parameter of the function memLeakTracking_init described herein.

Depending on the embodiment, one or more of the following memory tracking parameters may be implemented in the memory leak tracker unit:
**minAllocSize:** This parameter may be configured in some embodiments in connection with a feature of the memory leak tracking unit according to which only memory allocations with a size equal or higher to minAllocSize may be may trigger the storing of corresponding memory allocation data. In some embodiments, a predefined value of this parameter (e.g. 0) may be used to deactivate the feature, that is, to trigger the storing of corresponding memory allocation data for memory allocations irrespective of their size.
**timeAllocSuspect:** This parameter may be configured in some embodiments to define a time duration (e.g. expressed in milliseconds) of a memory allocation beyond which the memory allocation may be deemed indicating a potential memory leak and data related thereto may be stored in a log file based on determining that the memory allocation has not been freed during the time duration.
**sizeArrayStoringinfo:** This parameter may be configured in some embodiments to set a maximum cumulative number of memory allocation data records that can be registered (stored) in storage memory. The higher this maximum number is configured, the more precise the memory leak tracker unit is, at the expense however of the impact of using the unit on the resources of the system on which it is used.
**loggingInfoBlocking:** This parameter may be configured (e.g. as a Boolean) for the memory leak tracker unit to manage the storing into memory of memory allocation data records respectively corresponding to two successive memory allocations. In some embodiments, the memory leak tracker may be configured to determine whether or not the storing of memory allocation data corresponding to a memory allocation is to be blocked (or halted). In some embodiments, in case it is determined that the storing of memory allocation data corresponding to a memory allocation is to be blocked (or halted), processing of the next memory allocation may be blocked, for example at least while a current memory allocation undergoes processing. For example, in some embodiments, the next memory allocation may have to wait for information that the storing into memory of the memory allocation data related to the current memory allocation is complete before being processed. In some embodiments, in case it is determined that the storing of memory allocation data corresponding to a memory allocation is not to be blocked (or halted), processing of the next allocation may not be blocked, at the risk that the current memory allocation may still undergo processing (for example storing in memory of the corresponding memory allocation data may not be completed).

Using the **loggingInfoBlocking** parameter value that activates the halting the processing of a next memory allocation until the processing of a current memory allocation is complete may advantageously be used in use cases where it is desired to ensure that all memory allocation that are to be recorded are effectively recorded (through corresponding memory allocation data stored in memory). However, this may have an impact for system that execute in real-time or near-real time. To the contrary, using the **loggingInfoBlocking** parameter value that deactivates the halting the processing of a next memory allocation until the processing of a current memory allocation is complete may advantageously be used in use cases where it is desired to minimize the impact of the memory leak detection process on the system operation (which may be desirable for real-time or near-real time systems), possible at the expense of one or more memory allocations that are to be recorded not being effectively recorded (through corresponding memory allocation data stored in memory). In some embodiments, a counter may be configured to determine how many memory allocations were missed (that is, not processed).

**cbk_getCallstack:** This parameter may be configured in some embodiments for the user to set a function to retrieve the call stack. For example, in some embodiments, a predefined value (e.g. NULL) may be configured to be used by the user to control that the call stack not be retrieved. Retrieving the call stack may increase the time to store memory allocation data for each memory allocation, however may be desired in some use cases as it advantageously allows to locate a memory leak precisely and quickly.

**depthCallstack:** This parameter may be configured in some embodiments for the user to define the depth of the call stack. A larger call stack depth may imply a longer time to construct the call stack data to be stored in the memory allocation data corresponding to a memory allocation, however may be desired in some use cases as it allows to be more precise to find a memory leak. The **depthCallstack** parameter may be set more depth there is, the more intrusive the memory leak tracker will be.

**numCore:** This parameter may be configured in some embodiments in connection with a feature of the memory leak tracking unit allowing to specify a core in a multi-processing core system for which memory allocations may be monitored for leak tracking purposes. For example, the value of this parameter may identify a processing core on which the memory leak tracking may be focused, for example through detecting only memory allocation operations that are performed during execution of parts of a computer program that are executed on this processing core. As a result, memory allocation operations may be detected in some embodiments during execution of only a predefined portion of the computer program. In some embodiments, a value of this parameter (e.g. -1) may be defined so that it may be requested that detection of memory allocations according to embodiments of the present subject disclosure may be performed irrespective of the processing core on which the corresponding portion of the computer program is executed.

**taskToMonitor:** This parameter may be configured in some embodiments in connection with a feature of the memory leak tracking unit allowing to specify a task of the computer program being executed for which memory allocations may be monitored for leak tracking purposes. For example, in some embodiments, this parameter may be used to detect memory allocations only on portions of the computer program corresponding to the task. In some embodiments, a value of this parameter (e.g. 0) may be defined so that it may be requested that detection of memory allocations according to embodiments of the present subject disclosure may be performed irrespective of the computer task being executed.

**pathFileToLogInfo:** This parameter may be configured in some embodiments to define where the (log) file in which memory allocation data corresponding to memory allocation(s) deemed potential memory leaks is to be stored.

Depending on the embodiment, the above-described parameters may be used in the implementation of a memory leak tracking tool according to embodiments of the present subject disclosure to implement one or more of the following features:
- Redirect each memory allocation and memory free function to a wrapper so a custom memory leak tracking process can be applied for each allocation and free;
- For a memory allocation, store in memory data usable to locate a potential memory leak associated with the memory allocation into a data structure (e.g. a list, an array, a chain list or any suitable data structure);
- Retrieve the call stack for a memory allocation to store data regarding the call stack sequence leading to a potential memory leak;
- For a memory free operation, remove from memory the data stored upon detecting the corresponding memory allocation;
- A user interface may be configured in the tool for a user to define a time threshold based on which it is determined that a memory allocation is suspect of creating a memory leak issue (in some embodiments a memory allocation which has not been freed up during a time threshold after the allocation may be determined as suspect);
- In some embodiments, the memory leak tracking tool may be configured to be user driven, for example through being started and stopped by the user. For example, the tool may be configured in some embodiments to allow the user to delay the start of the memory leak tracking;

In some embodiments, the memory leak tracking tool may be configured to implement user configurable features, so that it may fit more precisely the need(s) of the user. For example, the memory leak tracking tool may be configured to allow the user to choose to retrieve or not the call stack, or to focus on allocations with a minimum size.

Advantages of the methods and apparatuses proposed in the present subject disclosure include the following, in contrast to conventional memory leak tracking tools:
The proposed scheme for memory leak detection can be implemented in some embodiments in resource constrained systems, such as for example embedded systems.

The proposed scheme for memory leak detection can be implemented in some embodiments for memory leak detection in target computer programs that are executed in real-time or near-real time.

The present subject disclosure provides a memory leak tracking unit (or tool) that can be tuned in some embodiments to adapt and fit the user's need and the system it is running on.

The proposed scheme for memory leak detection allows for using a stepwise approach, which may be particularly useful for memory leak detection for very resource-constraint systems. For example, in order to perform such a stepwise approach, a memory leak detection scheme according to embodiments of the present subject disclosure may be used to first detect severe memory leaks (that waste important memory space in view of the global memory resources of the system), and once such severe memory leaks have been corrected in the source code of the computer program, detect potentially remaining less severe memory leaks.

In some embodiments, the storing of any new memory allocation data into a list for allocation and the deletion of such memory allocation data once the corresponding allocated memory space is freed up may advantageously be used to reduce the time consumption to perform the operation to be less intrusive. Compared to other tools that make databases with all the allocated and freed blocks, building a list of limited size (but still with a size that the user can define) makes this list much faster to parse to find a free element to store the information in case of allocation and also to find the information to delete during a free, bearing in mind that the larger the size of the list, the more intrusive the tool becomes.

Embodiments of the proposed scheme for memory leak detection advantageously allow retrieving the call stack corresponding to the memory allocation, thereby allowing to locate the memory leak precisely and quickly.

**In** some embodiments, the proposed memory leak tracking unit can be enabled or disabled by the user without recompiling the code of the target computer program.

**In** addition, the present subject disclosure proposes a memory leak tracking unit that, depending on the embodiment, can advantageously be configured to perform one or more of:
- running on embedded real time systems as well as on other systems;
- be tuned to fit the system it is running on;
- implementing a fast method to store and release memory leak information;
- be enabled or disabled by the client so it can be embedded on client systems; and
- providing call stack information associated with a memory allocation suspected to create a memory leak, thereby allowing to quickly find the memory leak.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A memory leak detection method comprising:
• Upon detecting a memory allocation operation performed for allocating a memory space in a runtime memory during execution of a computer program on a processor coupled with the runtime memory, storing, in a storage memory, memory allocation data for the memory space allocation, wherein the memory allocation data comprises identification data of the memory allocation, and timestamp data representing a time associated with the allocation of the memory space;
• Determining a time duration for the memory space allocation based on the memory allocation data; and
• Determining whether there is an occurrence of a memory leak during the execution of the computer program on the processor based on the time duration for the memory space allocation.

2. The method according to claim 1, wherein the identification data comprises an address returned by execution of the memory allocation operation.

3. The method according to any of the preceding claims, further comprising: Upon detecting a memory free operation performed for freeing the memory space allocated during the execution of the computer program on the processor, removing from the storage memory the memory allocation data.

4. The method according to any of the preceding claims, wherein the memory allocation data further comprises call stack data for the memory allocation operation.

5. The method according to claim 4, further comprising: further to determining the occurrence of the memory leak, retrieving from the storage memory the call stack data for the memory allocation operation.

6. The method according to any of the preceding claims, wherein the occurrence of the memory leak is determined based on comparing the time duration for the memory space allocation with a predefined threshold.

7. The method according to any of the preceding claims, further comprising: further to determining the occurrence of the memory leak, generating a log file comprising data identifying the memory allocation operation.

8. The method according to any of the preceding claims, wherein the storing in the storage memory the memory allocation data for the memory space allocation is performed based on determining that the allocated memory space is greater than a predefined memory space allocation threshold.

9. The method according to any of the preceding claims, wherein the storing in the storage memory the memory allocation data for the memory space allocation is performed based on comparing a number of storing in the memory of respective memory allocation data for previously performed memory space allocations with a predefined maximum number threshold.

10. The method according to any of the preceding claims, wherein one or more of a memory allocation operation in a computer program code and a memory free operation in the computer program code are detected during execution of the computer program through a wrapper program configured in the computer program.

11. The method according to any of the preceding claims, wherein the memory allocation operation is detected during execution of a predefined portion of the computer program.

12. The method according to any of the preceding claims, wherein the memory allocation data is stored in a data structure (chart) in the storage memory further to determining that there is memory space available for storing the memory allocation data in the data structure.

13. An apparatus comprising a processor and a memory operatively coupled to the processor, wherein the apparatus is configured to perform a method according to any of claims 1 to 12.

14. A computer program product comprising computer program code embodied in a computer readable medium, said computer program code comprising instructions to, when provided to a computer system and executed, cause said computer to perform a method according to any of claims 1 to 12.

15. A data set representing, for example through compression or encoding, a computer program product according to claim 14.
